# EUROPEAN PATENT APPLICATION

(11) **EP 4 518 065 A1**
(43) Date of publication of application: **05.03.2025**
(21) Application number: 24150027.1
(22) Date of filing: 02.01.2024
(51) Int. Cl.: H02G 11/00, B60L 53/31

(54) **CHARGER AND CONTROL METHOD OF THE SAME**

(30) Priority: 04.09.2023 KR 20230117290
(71) Applicant: LG Electronics Inc., Yeongdeungpo-gu Seoul 07336 (KR)
(72) Inventor: LEE, Kangsuk, 06772 Seoul (KR); HUR, Hoon, 06772 Seoul (KR)
(74) Representative: Vossius & Partner Patentanwälte Rechtsanwälte mbB

(57) **Abstract**

The charger according to this disclosure comprises a rail body in which a plurality of rails is formed; a plurality of guides that are slidably arranged on each of the plurality of rails and on which the charging cable is suspended; a plurality of electromagnets disposed on each of the plurality of guides; and a control unit configured to control the plurality of electromagnets.

## Description

The present invention relates to a charger and a control method of the same

A charger is a device used to charge a storage battery.

An example of the charger may be an electric vehicle charger that charges a vehicle such as an electric vehicle, and electrical energy is supplied to a battery of the electric vehicle by connecting a charging connector provided at an end of a charging cable to a connection inlet installed in the electric vehicle.

When not in use, the charging cable may be wound or coiled, and the charging cable may be used after unwinding the coiled charging cable and withdrawing the charging cable from a dock or holder. Due to a length of a pulled-out or withdrawn charging cable, a middle portion of the charging cable may touch a floor or ground, and the portion touching the floor or ground may be damaged by repeated use, such as by being worn out or contaminated by contact with contaminants on the floor.

An example of a charger is a charging device for an electric vehicle as disclosed in Korean Patent Publication No. 10-2021-0026907A (published on March 10, 2021). The charging device for an electric vehicle comprises a charging body; a charging cable connected to the charging body and having a charging gun, connector or coupler at an end; a guide frame installed on one side of the charging body and on which a rail guide is formed; first and second roller modules formed to travel along the rail guide of the guide frame; and a mounting bracket that is connected to the first and second roller modules and transported together, and the first and second roller modules travel on the rail guide according to the stopping position of the electric vehicle that needs to be charged, and can move the position of the charging cable.

Another example of a charger is a charging facility for electric vehicles as disclosed in Korean Patent Publication No. 10-2019-0091673A (published on August 7, 2019). The charging facility for electric vehicles comprises a cable guide unit installed on the ceiling of the car deck where electric vehicles are loaded; a vehicle charging device that charges the driving battery of the electric vehicle while moving back and forth along the cable guide; and a power management device that supplies power to the driving battery. The cable guide part comprises a rail that provides a path along which the running part of the vehicle charging device moves and installed on the ceiling in the length direction of the car deck on which the electric vehicle is arranged in a straight line; and a plurality of guide rings installed to slide along the rail and configured to allow the charging cable of the vehicle charging device to be suspended at regular intervals. The vehicle charging device comprises a charging cable having one end connected to the power management device and a plug at the other end to charge the driving battery; and a traveling part that is movably installed on the cable guide part and moves the charging cable.

A purpose of this embodiment is to provide a charger and a control method of the same that can minimize the force with which the user pulls the charging cable.

A purpose of this embodiment is to provide a charger and a control method of the same through which a charging cable can be reliably pull in.

The invention is defined in the independent claims. Dependent claims describe preferred embodiments.

A charger according to this embodiment comprises a rail body on which a plurality of rails is formed; a plurality of guides that are slidably arranged on each of the plurality of rails and on which the charging cable is suspended; a plurality of electromagnets disposed on each of the plurality of guides; and a control unit configured to control the plurality of electromagnets.

The control unit may be configured to control a position of the charging cable by controlling the plurality of electromagnets.

Each of the plurality of guides may comprise an overlap area that overlaps another adjacent guide in the longitudinal direction of the guide and a non-overlap area that does not overlap another adjacent guide in the longitudinal direction of the guide.

A first guide of the plurality of guides may be disposed such that an overlap area of the first guide overlaps an overlap area of an adjacent second guide with respect to a longitudinal direction of the rail body.

The guide may comprise a base. A supporter may be formed on a bottom of the base and on which the charging cable is suspended.

The overlap area may be formed in the base, and supporters of the plurality of guides may not overlap.

The charger may further comprise a guide communication module disposed in the guide. A receiving portion in which the guide communication module is accommodated may be formed inside the guide.

The charger may further comprise a flat cable disposed between the rail body and the guide and configured to supply power to the plurality of electromagnets.

The charger may further comprise at least one ball disposed on an upper surface of the guide. The ball may be in contact with the flat cable. The at least one ball may be disposed between the upper surface of the guide and the flat cable.

The control unit may be configured to perform a pull-out mode in which the control unit is configured to control a plurality of electromagnets such that the plurality of guides moves away from each other.

The charger may comprise a main body to which a charging cable is connected.

The main body may comprise a holster on which a coupler of the charging cable is mounted. A coupler sensor may be installed in the holster to detect the coupler.

The main body may further comprise a coupler holder rotatably or slidably disposed in the holster.

The pull-out mode may be initiated when the coupler sensor detects pulling out of the coupler.

The charger may comprise a coupler holder rotatably or slidably disposed in the holster.

The pull-out mode may comprise a first mode in which the control unit is configured to turn on a first electromagnet and a second electromagnet among the plurality of electromagnets with the same polarity. It may further comprise a second mode in which the control unit is configured to turn on the first and second electromagnets among the plurality of electromagnets with opposite polarities after the first mode.

The control unit may be configured to turn on the second and the third electromagnets among the plurality of electromagnets with the same polarity during the second mode.

The pull-out mode may further comprise a third mode in which the control unit is configured to turn on the first and second electromagnets among the plurality of electromagnets to the same polarity after the second mode.

The control unit may be configured to turn on the second and the third electromagnets among the plurality of electromagnets with the same polarity during third mode.

The control unit may be configured to perform a pull-in mode in which a plurality of electromagnets is controlled so that the plurality of guides is moved closer to each other.

The pull-in mode may be initiated when the charging cable is disconnected from the electric vehicle.

The control unit may be configured to perform a locking mode that controls the plurality of electromagnets to keep the plurality of guides close to each other.

The control unit may be configured to generate a cable-out signal that controls a plurality of electromagnets so that the plurality of guides moves away from each other, if the coupler of the charging cable is separated from the main body. It may further be configured to generate a first cable stop signal, if the coupler of the charging cable is connected to an electric vehicle. It may further be configured to generate a cable-in signal that controls a plurality of electromagnets so that the plurality of guides are moved closer to each other, if the coupler of the charging cable is separated from the electric vehicle. It may further be configured to generate a second cable stop signal, if the coupler of the charging cable is mounted on the main body.

A control method of the charger according to this disclosure comprises generating a cable-out signal that controls a plurality of electromagnets so that the plurality of guides moves away from each other, if the coupler of the charging cable is separated from a main body; generating a first cable stop signal if the coupler of the charging cable is connected to an electric vehicle; generating a cable-in signal to control a plurality of electromagnets so that the plurality of guides are moved closer to each other, if the coupler of the charging cable is separated from the electric vehicle; and generating a second cable stop signal, if the coupler of the charging cable is mounted on the main body.

### BRIEF DESCRIPTION OF THE DRAWINGS

FIG. 1 is a perspective view showing a charger when a charging cable is pulled in according to an embodiment;
FIG. 2 is a perspective view showing the charger when the charging cable is pulled out according to an embodiment,
FIG. 3 is a view showing the configuration of the main body according to an embodiment,
FIG. 4 is a view of a holster provided in the main body according to an embodiment;
FIG. 5 is a view showing a coupler holder according to an embodiment;
FIG. 6 is a bottom view showing the bottom of the rail body according to an embodiment;
FIG. 7 is a perspective view of a guide according to an embodiment;
FIG. 8 is a partially cut away perspective view showing the rail body and guide according to an embodiment;
FIG. 9 is a view illustrating various modes of the charger according to an embodiment; and
FIG. 10 is a view showing the pull-out mode of the charger according to an embodiment.

Hereinafter, embodiments will be described in detail with reference to the accompanying drawings.

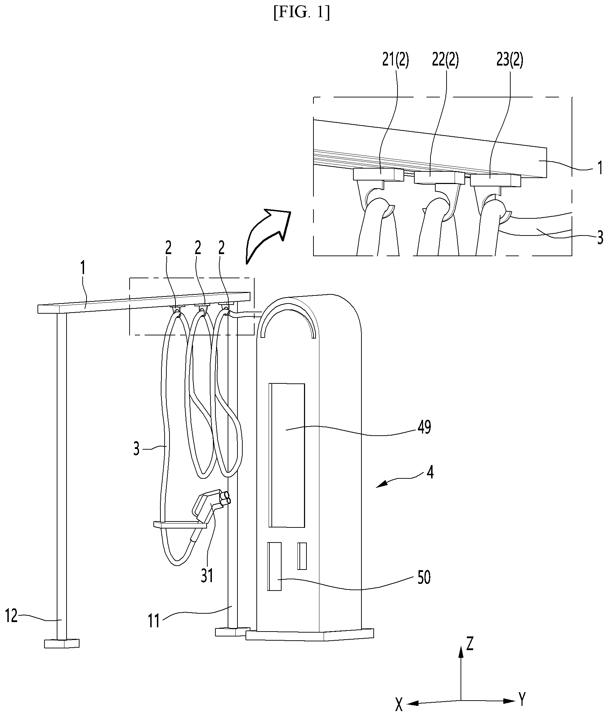

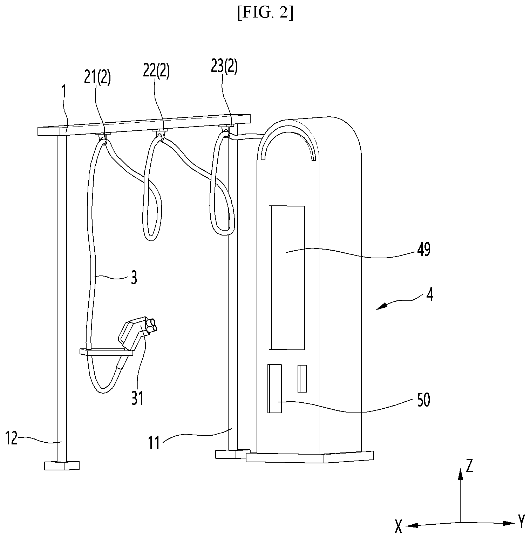

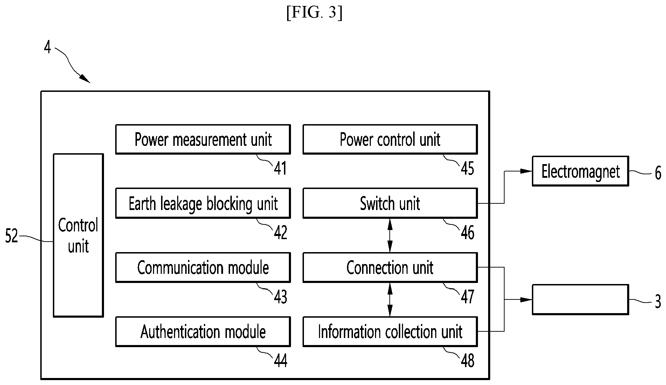

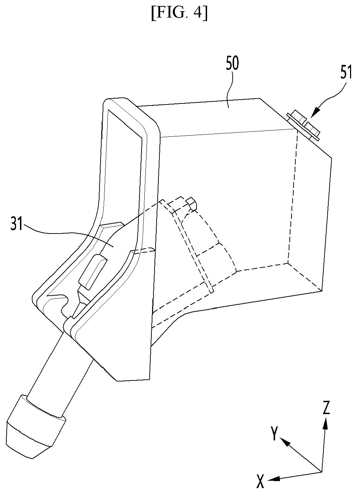

FIG. 1 is a perspective view showing a charger when a charging cable according to an embodiment is pulled in; FIG. 2 is a perspective view showing the charger when the charging cable according to an embodiment is pulled out, FIG. 3 is a view showing the configuration of the main body according to an embodiment, and FIG. 4 is a view of a holster provided in the main body according to an embodiment.

The charger may be a charging station that charges an electric vehicle.

The charger may comprise a rail body 1, a plurality of guides 2, a charging cable 3, and a main body 4.

The rail body 1 may be placed on the main body 4 or placed close to the main body 4.

The rail body 1 may be placed on a pair of posts 11 and 12 spaced apart from each other. The rail body 1 may be elongated along the front and rear direction X as shown in Fig. 2.

A rail on which the guide 2 slides may be formed on the rail body 1.

A plurality of guides 2 can slide along the rail body 1. A plurality of guides 2 may be disposed on the rail body 1 to slide independently of each other. The plurality of guides 2 may be spaced apart from each other in the longitudinal direction X of the rail body 1.

Each of the plurality of guides 2 may be a non-magnetic material. Each of the plurality of guides 2 may be a non-conductor.

A plurality of guides 2 may be arranged in a row on the rail body 1. A plurality of guides 2 may be disposed in a row in the longitudinal direction X of the rail body 1.

The charging cable 3 may be sequentially mounted on a plurality of guides 2. The plurality of guides 2 may be disposed to be spaced apart from each other in the longitudinal direction X of the rail body 1.

Each of the plurality of guides 2 may have the same or similar component. The number of guides 2 may be 2, 3, 4, etc. For convenience of explanation, an exemplary embodiment having three guides will be described below, but of course, the number of guides 2 is not limited thereto. Meanwhile, when explaining a common configuration of the plurality of guides 2, it is referred to as a guide 2, and when explaining a configuration separately, the guides 2 may be referred to as the first guide 21, the second guide 22, and the third guide 23, respectively, for individual description.

The plurality of guides 2 can distribute the load for mounting the charging cable 3, and the user can pull or push the charging cable 3 with a small force. The plurality of guides 2 can move sequentially and can be changed to various positions along the rail body 1.

As shown in FIG. 1, the plurality of guides 2 may be gathered as close as possible to the post 11 that is closer to the main body 4 among the pair of posts 11 and 12 and a coupler 31 of the charging cable 3 may be positioned close to the main body 4. In this case, the charging cable 3 can be defined as being pulled in.

As shown in FIG. 2, the plurality of guides 2 may be spaced apart from each other so that the coupler 31 of the charging cable 3 is positioned away from the main body 4, and in this case, the charging cable 3 can be defined as being pulled out.

The charging cable 3 may extend from the main body 4 and may be suspended on each of a plurality of guides 2. One end of the charging cable 3 may be connected to the connection unit 47 (refer to FIG. 3) of the main body 4, and a coupler 31 may be provided on the other end of the charging cable 3. An example of the coupler 31 may be a rechargeable/charging gun or coupler that a user can hold.

The charger may comprise a communication module that is configured to communicate with the electric vehicle being charged by the charging cable 3. The communication module may be a power line communication (PLC) module, or the like. A communication module may be provided in the coupler 31. The communication module placed in the coupler 31 may be configured to receive information related to charging from the electric vehicle. The communication module of the coupler 31 can be configured to communicate with the control unit 52.

The charging cable 3 can be connected to the main body 4.

The main body 4 may be a charger body, and the main body 4 may comprise a housing or case that forms the exterior of the charger.

Referring to Fig. 3, the main body 4 comprises a power measurement unit 41, an earth leakage blocking unit 42, a communication module 43, an authentication module 44, a power control unit 45, a switch unit 46, a connection unit 47, and an information collection unit 48 may be provided.

The power measurement unit 41 may be configured to measure the power supplied to the electric vehicle through the charging cable 3.

The earth leakage blocking unit 42 may comprise a circuit that blocks earth leakage in the main body 4 or the charging cable 3.

The communication module 43 may comprise a module configured to communicate with a mobile terminal or server.

The authentication module 44 may be configured to authenticate the user using the charger.

The power control unit 45 may be configured to control the power of the main body 4 or the charging cable 3.

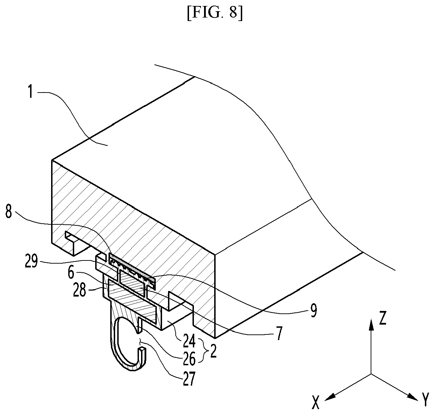

The switch unit 46 may be electrically connected to a power supply (not shown) provided to the guide 2, and the switch unit 46 may allow current to be applied to or blocked from the power supply provided to the guide 2. The power supply may be, e.g., the flat cable 8 as shown in Fig. 8). The switch unit 46 can allow current to be applied in the opposite direction.

The switch unit 46 may comprise a first switch capable of blocking the current applied to the power supply unit.

The switch unit 46 may comprise a second switch capable of switching the current applied to the power supply unit in the opposite direction.

The first switch and the second switch may also be disposed to be spaced apart from each other along the power system line. It is also possible that one of the first switch or the second switch is placed in the main body 4, and the other one of the first switch or the second switch is placed in the power supply unit of the guide 2.

It is possible for the first switch and the second switch to be provided together in one switch element, and it is also possible for one switch element to apply and block current and change the direction of the current.

The charging cable 3 may be connected to the connection unit 47.

The information collection unit 48 may collect and store information on the charging cable 3.

The information of the charging cable 3 may comprise connection information of the charging cable 3, charging information, suspending information, standby information, or the like.

The connection information may be information about whether the coupler 31 of the charging cable 3 is connected to or disconnected from the electric vehicle.

The charging information may comprise information about whether the charging cable 3 is currently charging and information about a charge level of the battery of the electric vehicle.

The suspending information may comprise information such as whether the coupler 31 of the charging cable 3 is suspended on the holster 50 or separated from the holster 50.

A screen 49 (as shown in FIGS. 1 and 2) may be disposed on the main body 4.

The user can check charging information through the screen 49 and input charging commands or payment information through the screen 49.

The main body 4 may comprise a holster 50 on which the coupler 31 of the charging cable 3 is mounted. The holster 50 may be a coupler holder or a charging gun holder.

A coupler sensor 51 that senses the coupler 31 may be installed in the holster 50. Examples of coupler sensors may be distance sensors or hall sensors or other sensors configured to sense the presence or absence of the coupler 31. The coupler sensor 51 is not limited to the above-mentioned types, and of course, any sensor that can sense the presence or absence of the coupler 31 may be applied.

If the coupler sensor 51 is a Hall sensor, a magnet may be installed in the coupler 31, and the coupler sensor 51 may detect a magnetic field when the coupler 31 is completely mounted on the holster 50. The coupler sensor 51 may transmit the detection result to the control unit 52. The coupler sensor 51 may transmit mounting information to the control unit 52.

When the coupler 31 is completely mounted on the holster 50, the coupler sensor 51 can transmit an ON signal to the control unit 52. When the coupler 31 is separated from the holster 50, the coupler sensor 51 may transmit an OFF signal to the control unit 52.

The charger may further comprise a control unit 52 that controls the overall operation of the charger. The control unit 52 may be installed in the main body 4. An example of the control unit 52 may comprise a processor or microcomputer that controls the overall operation of the charger.

An outlet (not shown) through which the charging cable 3 extends outside the main body 4 may be formed on one side of the main body 4.

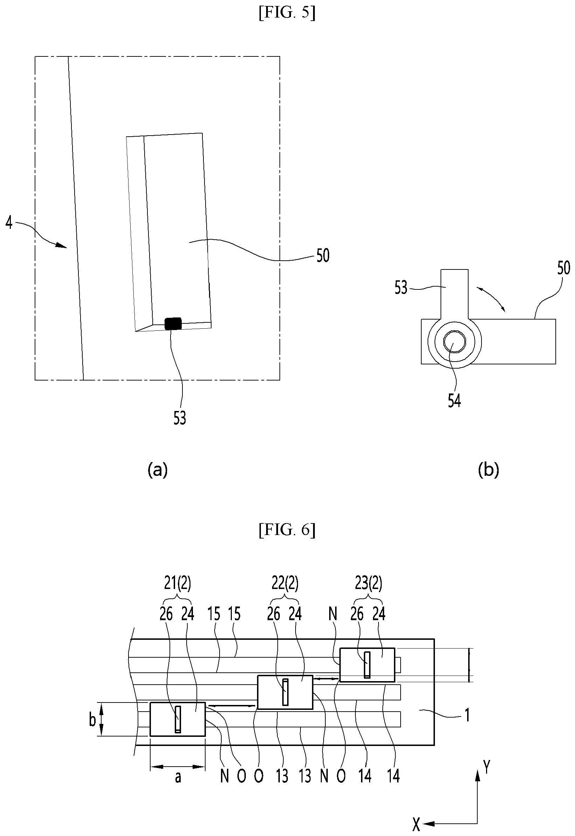

FIG. 5 is a view showing a coupler holder according to an embodiment.

The charger may comprise a coupler holder 53.

A groove may be formed in the coupler 31 that may be seated in the coupler holder 53 or configured to receive the coupler holder 53. When the coupler 31 is inserted into the interior of the holster 50 and seated in the coupler holder 53, an accidental removal of the coupler 31 may be prevented.

FIG. 5 (a) is a view showing the coupler holder 53 being disposed to protrude inside the holster 50, and FIG. 5 (b) is a view showing an example of the coupler holder being rotated.

The coupler holder 53 may be placed in the holster 50 to rotate or slide.

The charger may further comprise a driving source 54 such as a motor capable of rotating the coupler holder 53.

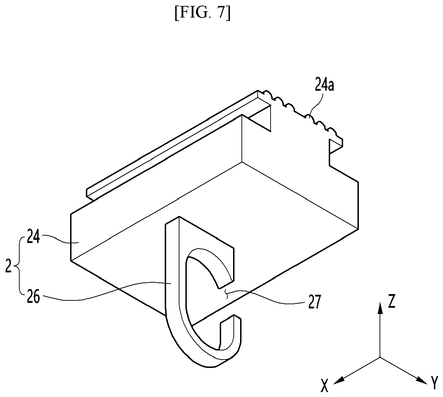

FIG. 6 is a bottom view showing the rail body according to an embodiment; FIG. 7 is a perspective view of a guide according to an embodiment; and FIG. 8 is a partially cut away (cross sectional) perspective view showing the rail body and guide according to an embodiment.

The rail body 1 may comprise a beam with a space formed therein, and an opening for forming a rail may be formed in the lower plate of the beam.

The upper portion of the guide 2 can be movably accommodated in the space of the beam.

The opening of the beam may be located on the lower side of the space of the beam, and the guide 2 may be moved along the opening in the longitudinal direction of the rail body 1.

A plurality of rails 13, 14, and 15 may be formed on the rail body 1. Each of the plurality of rails 13, 14, and 15 may be formed to be elongated along the longitudinal direction X of the rail body 1. The plurality of rails 13, 14, and 15 may be spaced apart from each other in a direction Y perpendicular to the longitudinal direction X of the rail body 1.

The plurality of guides 2 may be disposed to slide on each of the plurality of rails 13, 14, and 15, respectively.

The plurality of rails 13, 14, and 15 may correspond to the plurality of guides 2, and the charger may comprise a first guide 21, a second guide 22, and a third guide 23. That is, one rail per guide may be provided.

The plurality of rails 13, 14, and 15 comprise a first rail 13 on which the first guide 21 is slidably guided, and a second rail 14 on which the second guide 22 is slidably guided, and a third rail 15 on which the third guide 23 is slidably guided.

The upper plate of each of the plurality of guides 2 may be seated on a rail.

The plane of each of the plurality of guides 2 may be rectangular, and the length a may be greater than the width b.

Each of the plurality of guides 2 may comprise an overlap area O and a non-overlap area N.

As shown in FIG. 6, the overlap area O may be an area that overlaps a sliding area of another adjacent guide among the guides 2 in the longitudinal direction X of the guide 2. The overlap area O may align with another adjacent guide in the longitudinal direction X of the guide 2.

The overlap area O of the first guide 21 may overlap the second guide 22 in the longitudinal direction X of the first guide 21 and may align with the second guide 22 in the longitudinal direction X of the first guide 21.

The overlap area O of the second guide 22 may overlap the third guide 23 in the longitudinal direction X of the second guide 22 and may align with the third guide 23 in the longitudinal direction X of the second guide 22.

As shown in FIG. 6, the non-overlap area N may be an area that does not overlap with another adjacent guide in the longitudinal direction X of the guide.

The non-overlap area N of the first guide 21 may not overlap the second guide 22 in the longitudinal direction X of the first guide 21.

The non-overlap area N of the second guide 22 may not overlap the third guide 23 in the longitudinal direction X of the second guide 22.

The first guide 21 may comprise a non-overlap area N and an overlap area O.

The second guide 23 may comprise a pair of overlap areas O and a non-overlap area N located between the pair of overlap areas O. One of the pair of overlap areas O may overlap the overlap area O of the first guide 21, and the other of the pair of overlap areas O may overlap the overlap area O of the third guide 23.

The third guide 23 may comprise an overlap area O and a non-overlap area N.

If each of the plurality of guides 2 comprises an overlap area O and a non-overlap area N, the plurality of guides 2 can move sequentially in the order disposed on the rail body 1, and the entanglement of the charging cable 3 can be minimized.

An electromagnet 6 (see FIG. 8) may be disposed in each of the plurality of guides 2. An electromagnet receiving portion 28 in which the electromagnet 6 is accommodated may be formed inside the guide 2.

The control unit 52 can control a plurality of electromagnets 6.

The control unit 52 may be configured to control the electromagnet 6 by outputting a control signal to the switch unit 46 (refer to FIG. 3). The control unit 52 may be configured to independently control the plurality of electromagnets 6 and independently move the plurality of guides 2.

The control unit 52 may be configured to control adjacent electromagnets 6 to have the same polarity or the opposite polarity. The control unit 52 may be configured to control the switch unit 46 to change adjacent electromagnets 6 to have the same polarity or the opposite polarity.

Controlling adjacent electromagnets 6 to the same polarity may mean controlling each of the adjacent electromagnets 6 so that the areas facing each other among the adjacent electromagnets 6 have the same polarity (N-N or S-S).

Controlling adjacent electromagnets 6 to opposite polarities may mean controlling each of the adjacent electromagnets 6 so that the areas facing each other among the adjacent electromagnets 6 have opposite polarities (N-S or S-N).

The guide 2 may comprise a base 24 and a supporter 26.

The base 24 may be guided along the rail body 1 in the longitudinal direction X of the rail body 1, and the guide 2 may be a linear moving guide.

If the charging cable 3 is suspended on the supporter 26, the supporter 26 may support the suspended portion of the charging cable 3.

The supporter 26 may protrude downward from the bottom of the base 24. The supporter 26 may have a ring shape, as shown in FIG. 7. In particular, the supporter 26 may have the shape of an open ring or a C-shape. The supporter 26 may have an opening 27 through which the charging cable 3 can pass. The opening 27 may be opened in a horizontal direction on either the left or right side of the supporter 26. The opening 27 may be opened in the left and right direction Y on either the left or right side of the supporter 26. The charging cable 3 can be inserted through the opening 27 at the side of the supporter 26 and suspended in the supporter 26.

The opening directions of the openings 27 of the supporters 26 of the plurality of guides 2 may be alternately opposite to each other.

If the opening 27 formed in the supporter 26 of the first guide 21 is formed on the left side of the supporter 26, the opening 27 formed in the supporter 26 of the second guide 22 may be formed on the right side of the supporter 26, and the opening 27 formed on the supporter 26 of the third guide 23 may be formed on the left side of the supporter 26.

Conversely, if the opening 27 formed in the supporter 26 of the first guide 21 is formed on the right side of the supporter 26, the opening 27 formed in the supporter 26 of the second guide 22 may be formed on the left side of the supporter 26, and the opening 27 formed in the supporter 26 of the third guide 23 may be formed on the right side of the supporter 26.

If the opening 27 formed in the supporter 26 of an adjacent guide 2 is opened in the opposite direction with respect to a direction of opening 27 in an adjacent guide 2 (i.e., alternately), the charging cable 3 can be reliably mounted on the plurality of guides 2.

The supporters 26 of the plurality of guides 2 may be parallel to each other.

The overlap area O may correspond to an area of the base 24, and the area of the supporters 26 of the plurality of guides 2 may not overlap. In this case, entanglement of the charging cable 3 can be minimized.

The charger may comprise a guide communication module 7 disposed on the guide 2. A communication module receiving portion 29 in which the guide communication module 7 is accommodated may be formed inside the guide 2.

Examples of the communication module 7 may be a Bluetooth (BT) communication module, an ultra-wideband (UWB) communication module, or the like.

A user or an administrator may communicate with the guide communication module 7 through a mobile terminal external to the charger, and the guide communication module 7 may receive signals and other data from the mobile terminal, etc.

The guide communication module 7 may be configured to communicate with the communication module provided in the coupler 31, and the electromagnet 6 provided in the guide 2 can be turned on or off according to the command received by the guide communication module 7.

The charger may further comprise a flat cable 8. The flat cable 8 may supply power to the electromagnet 6. The flat cable 8 may be elongated along the longitudinal direction X of the rail body 1. The flat cable 8 may be strip-shaped or plate-shaped. The flat cable 8 can be accommodated in the space of the beam.

The flat cable 8 may be placed between the rail body 1 and the guide 2. The flat cable 8 may be placed above or on the upper surface of the guide 2. The flat cable 8 may extend horizontally, particularly in the front and rear direction.

The flat cable 8 can apply current to the electromagnet 6 of the guide 2 in a state its position is fixed to the rail body 1.

The charger may further comprise bearings, e.g., balls 9.

The ball 9 may be placed on the upper surface of the guide 2. The ball 9 can be brought into contact with the flat cable 8. A ball receiving portion 24a in which a portion of the ball 9 is accommodated may be formed on the upper surface of the guide 2. The ball 9 can roll when the guide 2 moves.

A plurality of balls 9 may be placed in the charger, and the guide 2 may slide smoothly on the rail body 1 via the balls 9.

An example of the guide 2 may be provided with an electrical contact point electrically connected to the electromagnet 6, and the electrical contact point may be in contact with the flat cable 8. Even if the guide 2 slides along the rail body 1, the electrical contact point may remain in contact with the flat cable 8 and apply a current to the electromagnet 6.

Another example of the guide 2 may comprise a wire electrically connected to the electromagnet 6, and the wire may be connected to the flat cable 8. Even if the guide 2 slides along the rail body 1, the wire can remain connected to the flat cable 8, and current can be applied to the electromagnet 6.

The other example of the guide 2 may comprise a ball 9 electrically connected to the electromagnet 6, and the ball 9 may be in contact with the flat cable 8. Even if the guide 2 slides along the rail body 1, the ball 9 can remain in contact with the flat cable 8 and apply a current to the electromagnet 6.

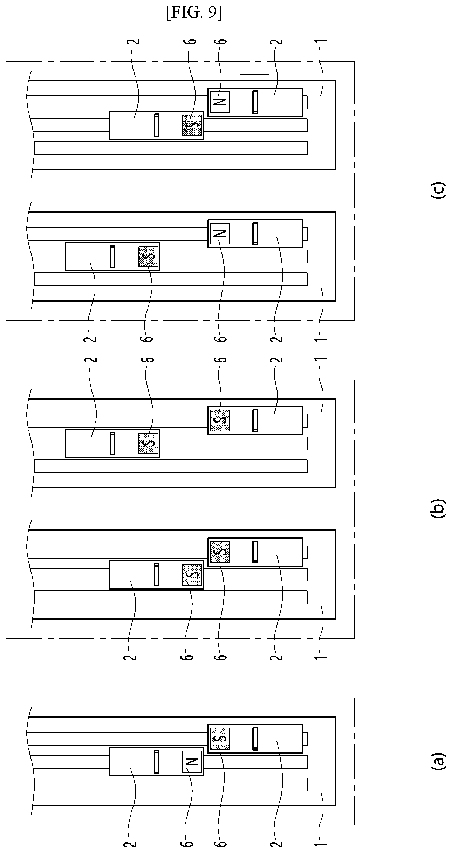

FIG. 9 is a view illustrating various modes of the charger according to an embodiment.

The control unit 52 may be configured to perform a locking mode (refer to (a) of FIG. 9). The locking mode can be performed in the initial state of the charger.

During the locking mode, the control unit 52 may be configured to control the plurality of electromagnets 6 to maintain the plurality of guides 2 to be positioned close to each other, as shown in (a) of FIG. 9.

The locking mode may be performed while the coupler 31 is maintained in the holster 50.

The coupler sensor 51 may be configured to transmit a cable maintenance signal to the control unit 52 while the coupler 31 is maintained in the holster 50. When or while a cable maintenance signal is input, the control unit 52 may be configured to control the electromagnets 6 of the two adjacent guides 2 to have opposite polarities, and the two adjacent guides 2 can maintain a state in which they are positioned close to each other.

The control unit 52 may be configured to perform a pull-out or withdrawn mode (refer to (b) of FIG. 9). The pull-out mode may be referred to as a cable-out mode.

During the pull-out mode, the control unit 52 may control the plurality of electromagnets 6 so that the plurality of guides 2 are spaced apart from each other, as shown in (b) of FIG. 9.

The pull-out mode may be initiated if the coupler sensor 51 detects separation of the coupler 31 from the holster 50.

If the coupler 31 is separated from the holster 50, the coupler sensor 51 can detect this and transmit a cable separation signal to the control unit 52. If a cable separation signal is input, the control unit 52 can be configured to control the electromagnets 6 of the two adjacent guides 2 to have the same polarity, and the two adjacent guides 2 can be controlled to be spaced apart from each other.

The control unit 52 may perform the pull-in or retracting mode (refer to (c) of FIG. 9). The pull-in mode may be referred to as a cable-in mode.

During the pull-in mode, the control unit 52 may control the plurality of electromagnets 6 so that the plurality of guides 2 are positioned to be closer to each other, as shown in (c) of FIG. 9.

The pull-in mode may be initiated if the charging cable 3 is disconnected from the electric vehicle. The coupler 31 can communicate with the electric vehicle through PLC communication, or the like, and when the coupler 31 is separated from the electric vehicle, the control unit 52 may be configured to control the electromagnets 6 of the two adjacent guides 2 to have the opposite polarity. This can be done, and the two adjacent guides (2) can be controlled to be moved towards each other or positioned close to each other.

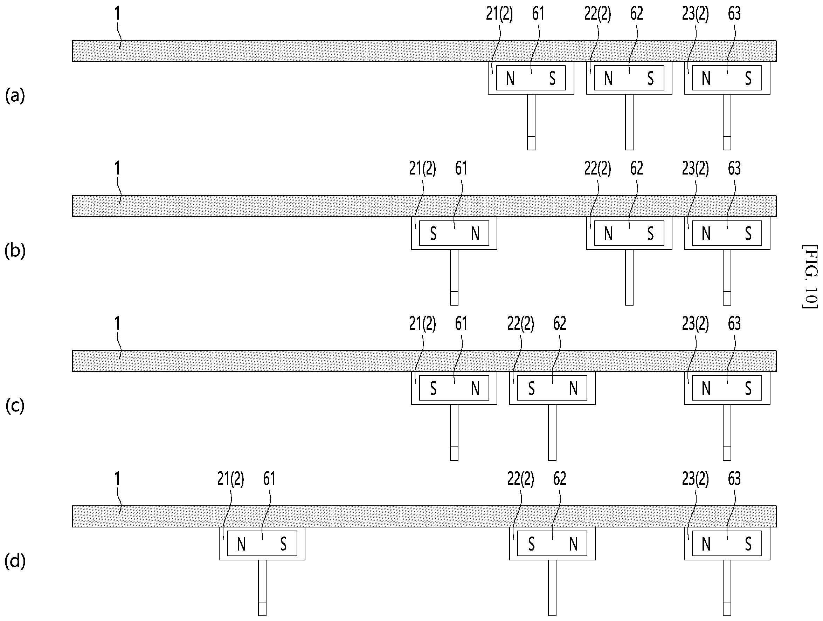

FIG. 10 is a view showing the pull-out mode of the charger according to an embodiment.

Hereinafter, for convenience of explanation, the electromagnet installed in the first guide 21 will be referred to as 61, the electromagnet installed in the second guide 22 will be referred to as 62, and the electromagnet installed in the third guide 23 will be referred to as 63.

The pull-out mode can be performed during the locking mode, i.e., when the charger is in the locking mode (refer to (a) of FIG. 10).

The pull-out mode may include sequentially performing the first mode (refer to (b) of FIG. 10), the second mode (refer to (c) of FIG. 10), and the third mode (refer to (d) of FIG. 10).

The first mode may be initiated during the locking mode.

During the first mode, the first electromagnet 61 and the second electromagnet 62 among the plurality of electromagnets 6 may be controlled to have the same polarity, i.e., to be turned on with the same polarity, as shown in (b) of FIG. 10. When the first electromagnet 61 and the second electromagnet 62 are turned on with the same polarity, the first guide 21 and the second guide 22 can move away from each other, as shown in (b) of FIG. 10.

During the first mode, the control unit 52 may be configured to control, e.g., turn on, the second electromagnet 62 and the third electromagnet 63 to have opposite polarities or may not apply current to the third electromagnet 63.

During the first mode, the first guide 21 can be moved along the rail body 1, as shown in (b) of FIG. 10, and the first guide 21 and the second guide 22 may be spaced apart from each other.

The second mode may be performed after the first mode. During the second mode, the first electromagnet 61 and the second electromagnet 62 among the plurality of electromagnets 6 may be controlled to have opposite polarities. When the first electromagnet 61 and the second electromagnet 62 have opposite polarities, the first guide 21 and the second guide 22 can be attracted to each other, i.e., moved towards each other, due to an attractive magnetic force between the first and second electromagnets 61, 62.

During the second mode, the control unit 52 may control the second electromagnet 62 and the third electromagnet 63 among the plurality of electromagnets 6 to have the same polarity.

Accordingly, during the second mode, the second guide 22 can be moved along the rail body 1, as shown in (c) of FIG. 10, and the second guide 22 and the first guide 21 may be positioned close to each other, and the second guide 22 may be spaced apart from the third guide 23.

The third mode may be performed after the second mode, and during the third mode, the first electromagnet 61 and the second electromagnet 62 among the plurality of electromagnets 6 may be controlled to have the same polarity. When the first electromagnet 61 and the second electromagnet 62 have the same polarity, the first guide 21 and the second guide 22 can move away from each other.

During the third mode, the control unit 52 can be configured to control the second electromagnet 62 and the third electromagnet 63 among the plurality of electromagnets 6 to have the same polarity.

During the third mode, the first guide 21 can be moved along the rail body 1, as shown in (d) of FIG. 10, and the first guide 21 and the second guide 22 may be spaced apart from each other.

As shown in (d) of Figure 10, when the first guide 21, the second guide 22, and the third guide 23 are deployed, each of the first guide 21, the second guide 22, and the third guide 23 can be spaced apart from other adjacent guides by a set distance or more. Thus, the pull-out mode may be terminated.

The pull-in mode may proceed in the reverse order of the pull-out mode and may be initiated in the third mode state. During the pull-in mode, the charger can sequentially perform the third mode, the second mode, and the first mode, and the charger can perform the locking mode after the pull-in mode. The first, second, and third guides 21, 22, 23 may be positioned as shown in (a) of FIG. 10.

The control unit 52 may generate a cable out signal that controls a plurality of electromagnets 61 and 62 so that the plurality of guides 21, 22 and 23 are moved away from each other, if the coupler 31 of the charging cable 3 is separated from the main body 4. The plurality of guides 21, 22, and 23 may be moved as shown in FIG. 2, and the cable 3 connected to the main body 4 may be extended.

Thereafter, the control unit 52 may generate a first cable stop signal if the coupler 31 of the charging cable 3 is connected to the electric vehicle, and movement of the plurality of guides 21, 22, and 23 may be stopped. The charging cable 3 may not be extended any further while connected to the main body 4 and the electric vehicle.

An example of the first cable stop signal may be a signal that turns off the plurality of electromagnets 61, 62, and 63.

Thereafter, the control unit 52 can be configured to generate a cable in signal that controls a plurality of electromagnets 61, 62 (62) so that the plurality of guides 21, 22, and 23 are positioned/moved closer to each other, if the coupler 31 of the charging cable 3 is separated from the electric vehicle. The plurality of guides 21, 22, and 23 can be moved as shown in FIG. 1, and the cable 3 connected to the main body 4 may be pulled as close to the main body (4) as possible.

Thereafter, the control unit 52 may be configured to generate a second cable stop signal, if the coupler 31 of the charging cable 3 is mounted on the main body 4, and movement of the plurality of guides 21, 22, and 23 may be stopped. The charging cable 3 can be maintained as close to the main body 4 as possible while connected to the main body 4.

The second cable stop signal may be the same or different from the first cable stop signal.

An example of the second cable stop signal may be a signal that turns off the plurality of electromagnets 61, 62, and 63. Another example of the second cable stop signal may be a signal that controls a plurality of electromagnets 61, 62, and 63 so that the electromagnets 61, 62, and 63 attract each other.

In an embodiment, the control method of the charger comprises a cable-out step; a first stop step; a cable-in stage; and a second stop step. The cable out step; the first stop step; the cable-in step; and the second stop step may be performed sequentially.

The cable out step may be initiated if the coupler 31 of the charging cable 3 is separated from the body 4. When the cable out step is initiated, the control unit 52 may generate a cable out signal to control the plurality of electromagnets 61, 62, and 63 so that the plurality of guides 21, 22, and 23 are positioned/moved to be spaced apart from each other.

The first stop step can be initiated if the coupler 31 of the charging cable 3 is connected to the electric vehicle, and the cable out step can be ended. When the first stop step is initiated, the control unit 52 may generate a first cable stop signal. An example of the first cable stop signal may be a signal that turns off the plurality of electromagnets 61, 62, and 63.

The cable in step can be initiated once the coupler 31 of the charging cable 3 is disconnected from the electric vehicle. When the cable-in step is initiated, the control unit 52 may generate a cable-in signal to control the plurality of electromagnets 61, 62, and 63 so that the plurality of guides 21, 22, and 23 are positioned/moved to be closer to each other.

The second stop step can be started when the coupler 31 of the charging cable 3 is mounted on the main body 4, and the cable in step can be ended. When the second stop phase is initiated, a second cable stop signal may be generated. An example of the second cable stop signal is a signal that turns off the plurality of electromagnets 61, 62 and 63 or a plurality of electromagnets 61 and 62 so that the plurality of electromagnets 61, 62 and 63 attract each other. It may be a signal that controls at least one of the electromagnets 63.

According to embodiments, as the guide on which the charging cable is mounted moves and extends along the rail body, the force with which the user pulls the charging cable can be minimized.

In addition, as the guide on which the charging cable is mounted moves along the rail body to gather the charging cable, the force required by the user to return the charging cable can be minimized, and the charging cable can be returned to an original position with high reliability.

In addition, each of the plurality of guides comprises an overlap area, the order of the plurality of guides does not change, and twisting of the charging cable can be minimized.

In addition, since the supporter of the guide does not overlap with the supporter of an adjacent guide, twisting of the charging cable can be minimized.

In addition, when the user disconnects the charging cable from the holster, a pull-out mode is initiated, so no separate operation is required to start the pull-out mode, and convenience of use is high.

In addition, when the user disconnects the charging cable from the electric vehicle, a pull-in mode is initiated, so no separate operation is required to start the pull-in mode, and convenience of use is high.

The above description is merely an example of the technical idea of the present invention, and various modifications and variations can be made to those skilled in the art without departing from the essential characteristics of the present invention.

Therefore, the embodiments disclosed in the present invention are not intended to limit the technical idea of the present invention, but to explain, and the scope of the technical idea of the present invention is not limited by these embodiments. Unless indicated otherwise, the embodiments are fully compatible with each other and may be combined.

The protection scope of the present invention should be construed according to the claims below, and all technical ideas within the equivalent range should be construed as being comprised in the scope of the present invention.

## Claims

1. A charger comprising:
a rail body (1) on which a plurality of rails (13, 14, 15) is formed;
a plurality of guides (2) that are slidably arranged on each of the plurality of rails (13, 14, 15) and on which a charging cable (3) is suspended;
a plurality of electromagnets (6) disposed on each of the plurality of guides (2); and
a control unit (52) configured to control the plurality of electromagnets (6).

2. The charger according to claim 1,
wherein each of the plurality of guides (2) comprises:
an overlap area (O) that overlaps another adjacent guide (2) in the longitudinal direction of the guide (2), and
a non-overlap area (N) that does not overlap another adjacent guide (2) in the longitudinal direction of the guide (2).

3. The charger according to claim 1 or 2,
wherein the guide (2) comprises:
a base (24); and
a supporter (26) formed on a bottom of the base (24) and on which the charging cable (3) is suspended.

4. The charger according to claim 3,
wherein the overlap area (O) is formed in the base (24), and supporters (26) of the plurality of guides (2) do not overlap.

5. The charger according to any one of claims 1 to 4, further comprising:
a guide communication module (7) disposed in the guide (2),
wherein a receiving portion (29) in which the guide communication module (7) is accommodated is formed inside the guide (2).

6. The charger according to any one of claims 1 to 5, further comprising:
a flat cable (8) disposed between the rail body (1) and the guide (2) and configured to supply power to the electromagnets (6).

7. The charger according to any one of claims 1 to 6,
wherein the control unit (52) is configured to perform a pull-out mode in which the control unit (52) is configured to control a plurality of electromagnets (6) such that the plurality of guides (2) moves away from each other.

8. The charger according to any one of claims 1 to 7, further comprising
a main body (4) to which the charging cable (3) is connected;
wherein the main body (4) comprises:
a holster (50) on which a coupler (31) of the charging cable (3) is mounted; and
a coupler sensor (51) installed in the holster (50) to detect the coupler (31).

9. The charger according to claim 7 or 8,
wherein the pull-out mode comprises:
a first mode in which the control unit (52) is configured to turn on a first and a second electromagnet among the plurality of electromagnets (6) with the same polarity; and
a second mode in which the control unit (52) is configured to turn on the first and the second electromagnets among the plurality of electromagnets (6) with opposite polarities, after the first mode.

10. The charger according to claim 9,
wherein the control unit (52) is configured to turn on the second and a third electromagnet among the plurality of electromagnets (6) with the same polarity during the second mode.

11. The charger according to claim 9 or 10,
wherein the pull-out mode further comprises:
a third mode in which the control unit (52) is configured to turn on the first and the second electromagnets among the plurality of electromagnets (6) with the same polarity after the second mode.

12. The charger according to claim 11,
wherein the control unit (52) is configured to turn on the second and the third electromagnets among the plurality of electromagnets (6) with the same polarity during third mode.

13. The charger according to any one of claims 1 to 12,
wherein the control unit (52) is configured to perform a pull-in mode in which a plurality of electromagnets (6) is controlled so that the plurality of guides (2) are moved closer to each other.

14. The charger according to claim 13,
wherein the pull-in mode is initiated when the charging cable (3) is disconnected from an electric vehicle.

15. A control method of a charger comprising:
generating a cable-out signal that controls a plurality of electromagnets (6) so that the plurality of guides (2) moves away from each other, if a coupler (31) of a charging cable (3) is separated from a main body (4);
generating a first cable stop signal, if the coupler (31) of the charging cable (3) is connected to an electric vehicle;
generating a cable-in signal that controls a plurality of electromagnets (6) so that the plurality of guides (2) are moved closer to each other, if the coupler (31) of the charging cable (3) is separated from the electric vehicle; and
generating a second cable stop signal, if the coupler (31) of the charging cable (3) is mounted on the main body (4).

## Amended claims

### Amended claims in accordance with Rule 137(2) EPC.

1. A charger comprising:
a rail body (1) on which a plurality of rails (13, 14, 15) is formed;
a plurality of guides (2) that are slidably arranged on each of the plurality of rails (13, 14, 15) and on which a charging cable (3) is suspended, wherein the guide (2) is provided for each rail;
a plurality of electromagnets (6) disposed on each of the plurality of guides (2), wherein the electromagnet (6) is provided for each guide (2); and
a control unit (52) configured to control the plurality of electromagnets (6),
wherein the control unit (52) is configured to independently control the polarity of each electromagnet (6) such that the areas of two adjacent electromagnets facing each other have the same pole or opposite poles, and
wherein adjacent guides of the plurality of the guides (2) are configured to move away from each other or towards each other as a consequence of adjacent electromagnets (6) facing each other each other having the same pole or opposite poles, respectively.

2. The charger according to claim 1,
wherein each of the plurality of guides (2) comprises:
an overlap area (O) that overlaps another adjacent guide (2) in a longitudinal direction (X) of the guide (2), and
a non-overlap area (N) that does not overlap another adjacent guide (2) in the longitudinal direction (X) of the guide (2).

3. The charger according to claim 1 or 2,
wherein the guide (2) comprises:
a base (24); and
a supporter (26) formed on a bottom of the base (24) and on which the charging cable (3) is suspended.

4. The charger according to claim 3, insofar as depending on claim 2,
wherein the overlap area (O) is formed in the base (24), and supporters (26) of the plurality of guides (2) do not overlap.

5. The charger according to any one of claims 1 to 4, further comprising:
a guide communication module (7) disposed in the guide (2),
wherein a receiving portion (29) in which the guide communication module (7) is accommodated is formed inside the guide (2).

6. The charger according to any one of claims 1 to 5, further comprising:
a flat cable (8) disposed between the rail body (1) and the guide (2) and configured to supply power to the electromagnets (6).

7. The charger according to any one of claims 1 to 6,
wherein the control unit (52) is configured to perform a pull-out mode in which the control unit (52) is configured to control a plurality of electromagnets (6) such that the plurality of guides (2) moves away from each other.

8. The charger according to any one of claims 1 to 7, further comprising
a main body (4) to which the charging cable (3) is connected;
wherein the main body (4) comprises:
a holster (50) on which a coupler (31) of the charging cable (3) is mounted; and
a coupler sensor (51) installed in the holster (50) to detect the coupler (31).

9. The charger according to claim 7,
wherein the pull-out mode comprises:
a first mode in which the control unit (52) is configured to turn on a first and a second electromagnet among the plurality of electromagnets (6) with the opposite polarity; and
a second mode in which the control unit (52) is configured to turn on the first and the second electromagnets among the plurality of electromagnets (6) with same polarities, after the first mode,
wherein the control unit (52) is configured to turn on the second and a third electromagnet among the plurality of electromagnets (6) with the opposite polarity during the second mode,
wherein the first and second electromagnets are adjacent each other,
wherein the second and third electromagnets are adjacent each other,
wherein the pull-out mode further comprises:
a third mode in which the control unit (52) is configured to turn on the first and the second electromagnets among the plurality of electromagnets (6) with the opposite polarity after the second mode,
wherein the control unit (52) is configured to turn on the second and the third electromagnets among the plurality of electromagnets (6) with the opposite polarity during third mode.

10. The charger according to any one of claims 1 to 9,
wherein the control unit (52) is configured to perform a pull-in mode in which the plurality of electromagnets (6) is controlled so that the plurality of guides (2) are moved closer to each other.

11. The charger according to claim 10,
wherein the pull-in mode is initiated when the charging cable (3) is disconnected from an electric vehicle.

12. A control method of the charger according to any one of claims 1 to 11, the control method comprising:
generating a cable-out signal that controls a plurality of electromagnets (6) so that the plurality of guides (2) moves away from each other, if a coupler (31) of a charging cable (3) is separated from a main body (4);
generating a first cable stop signal, if the coupler (31) of the charging cable (3) is connected to an electric vehicle;
generating a cable-in signal that controls a plurality of electromagnets (6) so that the plurality of guides (2) are moved closer to each other, if the coupler (31) of the charging cable (3) is separated from the electric vehicle; and
generating a second cable stop signal, if the coupler (31) of the charging cable (3) is mounted on the main body (4).
